# EUROPEAN PATENT APPLICATION

(11) **EP 4 300 678 A1**
(43) Date of publication of application: **03.01.2024**
(21) Application number: 22831743.4
(22) Date of filing: 17.06.2022
(51) Int. Cl.: H01M 50/204

(54) **BATTERY PACK AND VEHICLE**

(30) Priority: 30.06.2021 CN 202110731924
(71) Applicant: BYD Company Limited, Shenzhen, Guangdong 518118 (CN)
(72) Inventor: FANG, Cheng, Shenzhen, Guangdong 518118 (CN); E, Congji, Shenzhen, Guangdong 518118 (CN); PENG, Qingbo, Shenzhen, Guangdong 518118 (CN)
(74) Representative: DehnsGermany Partnerschaft von Patentanwälten
(86) International application number: PCT/CN2022/099542
(87) International publication number: WO 2023/273925

(57) **Abstract**

The present disclosure provides a battery pack (100) and a vehicle. The battery pack (100) includes: an enclosure (10); a cell arranged in the enclosure (10); and a distribution box (30) arranged in the enclosure (10). The enclosure (10) includes a housing (11) and a cover body (12). A side of the housing (11) is provided with a picking and placing opening (101) for picking and placing the cell. The cover body (12) is arranged on the side of the housing (11) to close the picking and placing opening (101). The distribution box (30) is located in a position close to the picking and placing opening (101) in the housing (11). A metal plate (31) of the distribution box (30), the housing (11), and the cover body (12) all clad the cell.

## Description

### CROSS-REFERENCE TO RELATED APPLICATIONS

The present disclosure claims priority to Chinese Patent Application No. 202110731924.9, entitled "BATTERY PACK AND VEHICLE" and filed on June 30, 2021.

### FIELD

The present disclosure relates to the technical field of batteries, and more specifically, to a battery pack and a vehicle.

### BACKGROUND

A related art discloses a battery pack. An enclosure of the battery pack includes a base and a cover arranged above the base. The cover includes a top plate and a side panel extending in a circumferential direction of the top plate. The shape of a projection of the cover on a plane where the base is located is roughly the same as the shape of the base. Since the structure size of the cover is larger, components are not convenient to mount, and a large number of bolts are required to connect the cover to the base. In addition, a matching surface between the cover and the base is larger, so that the sealing performance of the battery pack cannot be ensured.

### SUMMARY

The present disclosure aims to solve at least one of the technical problems in the related art. Therefore, an objective of the present disclosure is to propose a battery pack. The battery pack has a simple structure, stronger resistance to electromagnetic compatibility (EMC) interference, and better signal transmission performance.

The present disclosure further proposes a vehicle with the foregoing battery pack.

A battery pack in an embodiment according to a first aspect of the present disclosure includes: an enclosure; a cell arranged in the enclosure; and a distribution box arranged in the enclosure. The enclosure includes a housing and a cover body. A side of the housing is provided with a picking and placing opening for picking and placing the cell. The cover body is arranged on the side of the housing to close the picking and placing opening. The distribution box is located in a position close to the picking and placing opening in the housing. A metal plate of the distribution box, the housing, and the cover body all clad the cell.

Compared with the technical solutions of using covers with larger structure sizes in related technologies, the battery pack according to an embodiment of the present disclosure has the advantages that a side of a housing is provided with a picking and placing opening, so a cover body with a smaller surface area can be used for closing the picking and placing opening; since the structure size of the cover body is smaller, components are convenient to mount, which is beneficial for increasing the production efficiency; moreover, the number of fasteners between the housing and the cover body can be reduced, thereby simplifying mounting processes and reducing costs; and in addition, a matching surface between the housing and the cover body can also be reduced, which is beneficial for reducing the sealing failure rate between the housing and the cover body.

According to some embodiments of the present disclosure, a surface area of a top of the housing and a surface area of a bottom of the housing are both greater than a surface area of the side of the housing.

According to some embodiments of the present disclosure, multiple chambers arranged in an extension direction of the picking and placing opening are defined in the housing, and an opening of each of the chambers is in communication with the picking and placing opening so that the cell is arranged in the chamber in a push-pull manner.

In some embodiments, the cell is attached to an inner surface of the chamber; and/or a gap between the cell and the inner surface of the chamber is filled with a thermally conductive structural adhesive.

In some embodiments, the housing includes one or multiple connected casings, the multiple casings are arranged in the extension direction of the picking and placing opening, and the multiple chambers are defined in each of the casings.

In some embodiments, the casing is made of aluminum alloy, stainless steel, or magnesium aluminum alloy, and the multiple casings are spliced together in a welding manner.

In some embodiments, at the opening of the chamber, a bottom wall of the casing exceeds a top wall of the casing, and the housing further includes two baffles; the housing includes one of the casings, the two baffles are oppositely arranged on sides of the casing, and the baffles and the casing define the picking and placing opening; or, the housing includes the multiple connected casings, the two baffles are oppositely arranged on sides of the two outermost casings, and the baffles and the multiple casings define the picking and placing opening.

According to some embodiments of the present disclosure, an extension length of an edge of the picking and placing opening is L1, a length of an outer contour line of the housing obtained by cutting a vertical plane parallel to a length direction of the picking and placing opening is L2, and the L1 is greater than or equal to the L2.

According to some embodiments of the present disclosure, a plane where the picking and placing opening is located is obliquely arranged relative to a horizontal plane.

In some embodiments, an included angle between the plane where the picking and placing opening is located and the horizontal plane is 35° to 75°.

According to some embodiments of the present disclosure, an edge of the picking and placing opening is provided with a first connecting hole, an outer periphery of the cover body is provided with a second connecting hole, and the housing is connected to the cover body through a fastener penetrating in the first connecting hole and the second connecting hole.

According to some other embodiments of the present disclosure, the cover body is welded to the housing.

According to some embodiments of the present disclosure, the outside of the enclosure is provided with multiple mounting brackets arranged at intervals.

According to some embodiments of the present disclosure, the outside of the enclosure is provided with a grounding portion.

According to some embodiments of the present disclosure, the enclosure is made of a metal material.

In some embodiments, a thickness of the enclosure is greater than 0.5 mm.

According to some other embodiments of the present disclosure, the enclosure includes a body of the enclosure, and a surface of the body of the enclosure is provided with a metal layer.

According to some embodiments of the present disclosure, the battery pack further includes: a heat exchange member arranged at a top and/or a bottom of the enclosure.

In some embodiments, the heat exchange member forms a plate member, the heat exchange member is laid at the top and/or the bottom of the enclosure, and the heat exchange member is attached to a surface of the top and/or the bottom of the enclosure.

A vehicle in an embodiment according to a second aspect of the present disclosure includes a battery pack according to the foregoing embodiment.

Additional aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings.
FIG. 1 is a schematic structural diagram of a battery pack from one perspective according to the embodiment of the present disclosure;
FIG. 2 is a schematic structural diagram of a battery pack from another perspective according to the embodiment of the present disclosure;
FIG. 3 is a schematic structural diagram of a battery pack with a cover body being in an open state according to the embodiment of the present disclosure;
FIG. 4 is a top view of a battery pack according to the embodiment of the present disclosure;
FIG. 5 is a schematic structural diagram of a housing of a battery pack and a heat exchange member being in a combined state according to the embodiment of the present disclosure;
FIG. 6 is a schematic structural diagram of the housing of the battery pack shown in FIG. 5;
FIG. 7 is a schematic structural diagram of a housing of a battery pack and a heat exchange member being in a separated state according to the embodiment of the present disclosure; and
FIG. 8 is a structural block diagram of a vehicle according to the embodiment of the present disclosure.

### Reference numerals:

battery pack 100,
enclosure 10, picking and placing opening 101, opening 102,
housing 11, casing 111, partition plate 1111, first connecting hole 1112, baffle 112, side flange 1121,
cover body 12, second connecting hole 1201, port 1202,
top plate 121, first side plate 122, first flange 1221, second side plate 123, second flange 1231,
mounting bracket 13, grounding portion 14, sealing ring 15,
distribution box 30, metal plate 31, low-voltage connector 32, high-voltage connector 33,
heat exchange member 40, interface 41, and
vehicle 500.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining the present disclosure, and should not be construed as a limitation on the present disclosure.

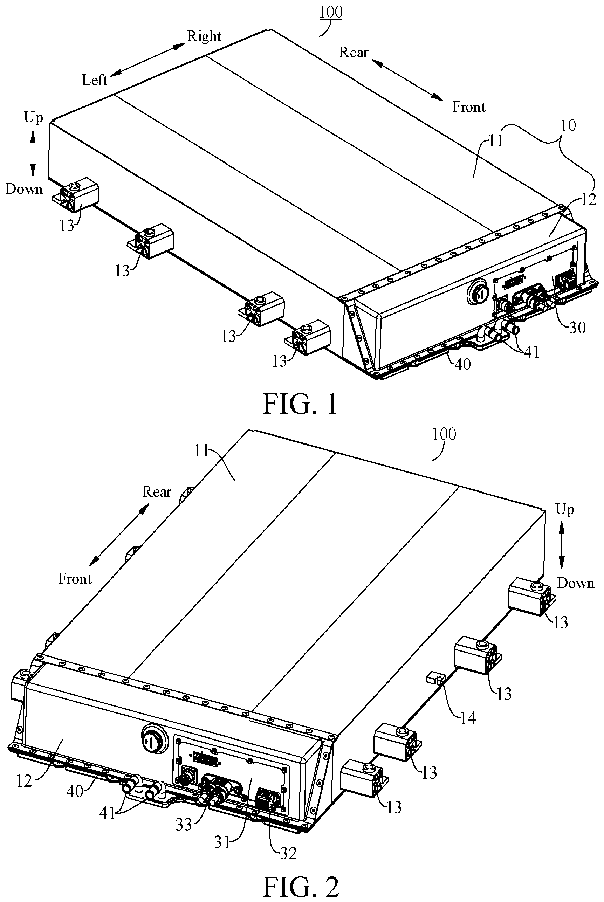

A battery pack 100 according to the embodiments of the present disclosure will be described below with reference to FIG. 1 to FIG. 7.

As shown in FIG. 1 and FIG. 2, a battery pack 100 according to the embodiment of the present disclosure includes an enclosure 10, a cell (not shown in the figures), and a distribution box 30. The cell is arranged in the enclosure 10. The distribution box 30 is arranged in the enclosure 10. The distribution box 30 includes a metal plate 31.

The enclosure 10 includes a housing 11 and a cover body 12. A side of the housing 11 is provided with a picking and placing opening 101. The picking and placing opening 101 is configured to pick and place the cell. The cover body 12 is arranged on the side of the housing 11 to close the picking and placing opening 101. The distribution box 30 is located in a position close to the picking and placing opening 101 in the housing 11. A metal plate 31 of the distribution box 30, the housing 11, and the cover body 12 all clad the cell.

Compared with the technical solutions of using covers with larger structure sizes in related technologies, the battery pack 100 according to the embodiment of the present disclosure has the advantages that the side of the housing 11 is provided with a picking and placing opening 101, so the cover body 12 with a smaller surface area can be used for closing the picking and placing opening 101; since the structure size of the cover body 12 is smaller, components are convenient to mount, which is beneficial for increasing the production efficiency; moreover, the number of fasteners between the housing 11 and the cover body 12 can be reduced, thereby simplifying mounting processes and reducing costs; and in addition, a matching surface between the housing 11 and the cover body 12 can also be reduced, which is beneficial for reducing the sealing failure rate between the housing 11 and the cover body 12.

A surface area of a top of the housing 11 and a surface area of a bottom of the housing 11 are both greater than a surface area of the side of the housing 11, that is, the cover body 12 is arranged on the side of the housing 11 with a relatively small surface area. Compared with the technical solutions of using sealing covers with larger surface areas in related technologies, the cover body 12 of the present disclosure is arranged on the side of the housing 11 and has a smaller surface area, which is beneficial for reducing the sealing failure rate; and due to a smaller size, the cover body 12 is convenient to mount.

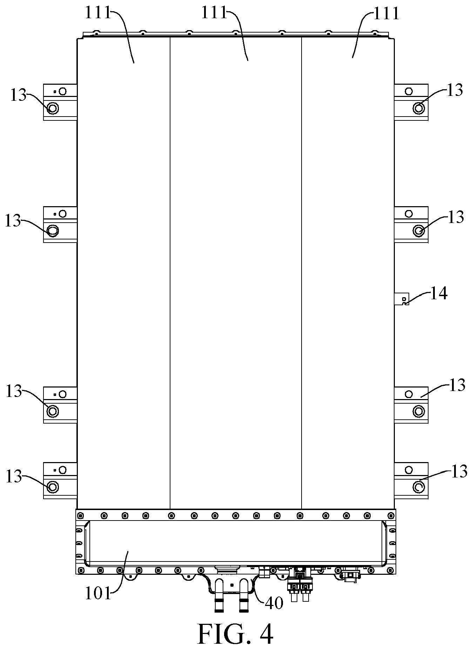

As shown in FIG. 4 to FIG. 7, according to some embodiments of the present disclosure, multiple chambers are defined in the housing 11 and are arranged in an extension direction of the picking and placing opening 101, each chamber is configured to accommodate a cell, and an opening 102 of each chamber is in communication with the picking and placing opening 101, so that multiple cells are respectively arranged in the chambers in a push-pull manner. That is, the battery pack 100 of the present disclosure is similar to a drawer structure, which is convenient to pick and place each cell and even can be used to place a blade type soft pack cell, thereby simplifying mounting processes and being beneficial for increasing the production efficiency.

In some embodiments, the cell is attached to an inner surface of the chamber. By attaching the cell to the inner surface of the chamber to enable each cell to be in full contact with the surface of the enclosure 10, the thermal conductivity of the enclosure 10 can be used to ensure better consistent temperature uniformity of the battery pack 100, so as to prolong the service life of the battery pack 100; and the space in the enclosure 10 can be fully used to increase the space utilization rate in the enclosure 10. In addition, by attaching the cell to the inner surface of the chamber, the structural strength of the entire battery pack 100 can also be increased.

In some other embodiments, a gap between the cell and the inner surface of the chamber is filled with a thermally conductive structural adhesive, which can not only ensure the mounting stability and use reliability of the cell and allow heat of the cell to be evenly conducted through the enclosure 10 to ensure extremely high temperature consistency, but also increase the structural strength of the entire battery pack 100.

It should be noted that, in order to ensure the smooth mounting of the cell into the chamber and prevent the cell from detaching from the chamber, usually, the cell is in interference fit with the inner surface of the chamber, and the chamber is filled with the thermally conductive structural adhesive by pouring to fill the gap between the cell and the inner surface of the chamber with the thermally conductive structural adhesive. Therefore, the structural strength of the battery pack 100 can be ensured, the space utilization rate can be increased, and the space utilization rate in the enclosure 10 reaches 90% or above.

In some embodiments, the housing 11 includes one or multiple connected casings 111. The multiple casings 111 are arranged in the extension direction of the picking and placing opening 101, and multiple chambers are defined in each casing 111. The structure is simple and is easy to process and mold. In an embodiment where the housing 11 includes a casing 111, the housing 11 covers the side of the casing 111. In an embodiment where the housing 11 includes multiple casings 111, the housing 11 is arranged on sides of the multiple casings 111 as an integral cover.

Each casing 111 may be made of multi-chamber aluminum alloy materials. For example, each casing 111 may be subjected to matte processing, and the multiple casings 111 may be spliced together in a welding manner. The structure is simple, the operation is simple, and it is beneficial for increasing the production efficiency. Of course, the casing 111 may also be made of stainless steel. In some embodiments, in order to achieve a lightweight design of the battery pack 100 and reduce the weight of the enclosure 10, the casing 111 may also be made of magnesium aluminum alloy.

In some examples, at the opening 102 of the chamber, a bottom wall of the casing 111 exceeds a top wall of the casing 111. The housing 11 further includes two baffles 112. The two baffles 112 are oppositely arranged on sides of the casing 111. The baffles 112 and the casing 111 define the picking and placing opening 101.

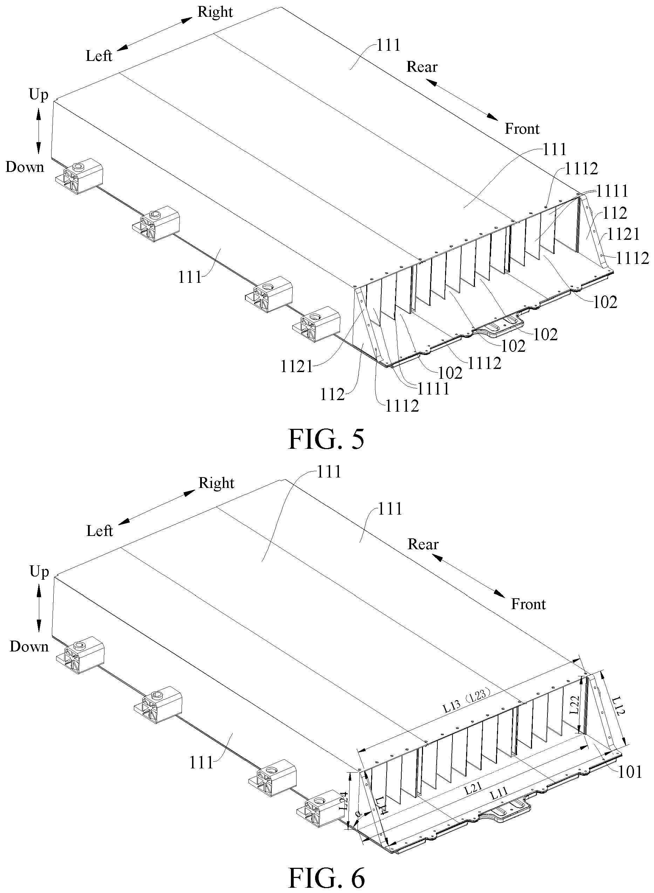

It can be understood that, in an embodiment where the housing 11 includes the casing 111, the two baffles 112 are oppositely arranged on sides of the casing 111 (left and right sides of the casing 111 as shown in FIG. 5), and the two baffles 112 and the casing 111 define the picking and placing opening 101. In an embodiment where the housing 11 includes the multiple connected casings 111, the two baffles 112 are oppositely arranged on sides of the two outermost casings 111 (the left side of the leftmost casing 111 and the right side of the rightmost casing 111 as shown in FIG. 5), and the two baffles 112 and the multiple casings 111 define the picking and placing opening 101.

Therefore, by arranging the baffle 112, a plane where the picking and placing opening 101 is located is a non-vertical plane. During mounting of components (for example, flexible circuit boards), such as the cell and the distribution box 30, it is convenient for observation and connection, and beneficial for increasing the production efficiency. Furthermore, both the bottom wall of the casing 111 and the baffle 112 can support the cover body 12, thereby facilitating the mounting of the cover body 12, and further increasing the production efficiency. The shape of the picking and placing opening 101 can be adjusted according to design needs.

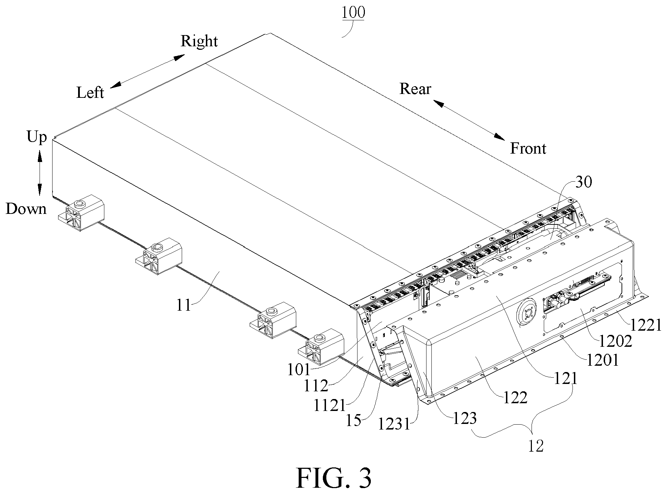

Specifically, as shown in FIG. 3 and FIG. 5, in this embodiment, the housing 11 includes three casings 111. The three casings 111 are arranged in left-and-right directions and are welded, and multiple partition plates 1111 arranged at intervals in left-and-right directions are arranged in each casing 111, so that multiple chambers arranged in left-and-right directions are defined in the casing 111. One baffle 112 is arranged on the left side of the leftmost casing 111, and another baffle 112 is arranged on the right side of the rightmost casing 111, thereby defining the picking and placing opening 101.

According to some embodiments of the present disclosure, an extension length of an edge of the picking and placing opening 101 is L1. A length of an outer contour line of the housing 11 obtained by cutting a vertical plane parallel to a length direction (left-and-right directions shown in FIG. 5) of the picking and placing opening 101 is L2. The L1 is greater than or equal to the L2. The edge of the picking and placing opening 101 here forms a sealing surface that needs to be matched with the cover body 12. By setting the extension length of the edge of the picking and placing opening 101 to meet the foregoing conditions, the sealing performance of matching between the housing 11 and the cover body 12 can be increased.

In order to facilitate understanding and clearly identify the positions indicated by the L1 and the L2, the housing 11 in FIG. 5 is labeled again in FIG. 6 by the inventor of the present disclosure.

Specifically, as shown in FIG. 6, edges of the picking and placing opening 101 include an upper edge, a lower edge, a left edge, and a right edge. The extension length of the lower edge of the picking and placing opening 101 is L 11. The extension length of the right edge of the picking and placing opening 101 is L12. The extension length of the upper edge of the picking and placing opening 101 is L 13. The extension length of the left edge of the picking and placing opening 101 is L14. That is, the L1 is equal to the sum of the L11, the L12, the L13, and the L14.

Further, outer contour lines of the housing 11 obtained by cutting a vertical plane parallel to a length direction (left-and-right directions shown in FIG. 6) of the picking and placing opening 101 include an upper contour line, a lower contour line, a left contour line, and a right contour line. The extension length of the lower contour line is L21. The extension length of the right contour line is L22. The extension length of the upper contour line is L23. The extension length of the left contour line is L24. That is, the L2 is equal to the sum of the L21, the L22, the L23, and the L24.

In other words, the extension length of the edge of the picking and placing opening 101 is L1, and the extension length of a projection of the picking and placing opening 101 on a vertical plane perpendicular to front-and-rear directions is L2. By defining the L1 to be greater than the L2, that is, defining a plane where the picking and placing opening 101 is located to be a non-vertical plane, the sealing performance of matching between the housing 11 and the cover body 12 can be increased.

According to some embodiments of the present disclosure, the plane where the picking and placing opening 101 is located is obliquely arranged relative to a horizontal plane. The horizontal plane here refers to a plane where the bottom wall of the housing 11 is located when the battery pack 100 is placed in an orientation shown in FIG. 5, that is, the plane where the picking and placing opening 101 is located is obliquely arranged relative to the plane where the bottom wall of the housing 11 is located.

By obliquely arranging the plane where the picking and placing opening 101 is located relative to the horizontal plane, the sealing performance between the housing 11 and the cover body 12 is ensured. Furthermore, during mounting of components (for example, flexible circuit boards), such as the cell and the distribution box 30, it is convenient for observation and connection, and beneficial for increasing the production efficiency. Moreover, the mounting of the cover body 12 is also facilitated, and the production efficiency is further increased. Of course, the plane where the picking and placing opening 101 is located may also be a vertical plane.

In some embodiments, an included angle α between the plane where the picking and placing opening 101 is located and the horizontal plane is 35° to 75°. For example, the included angle α between the plane where the picking and placing opening 101 is located and the horizontal plane may be 35°, 45°, 60°, 75°, or the like.

According to some embodiments of the present disclosure, the edge of the picking and placing opening 101 is provided with a first connecting hole 1112. An outer periphery of the cover body 12 is provided with a second connecting hole 1201. The housing 11 is connected to the cover body 12 through a fastener penetrating in the first connecting hole 1112 and the second connecting hole 1201. In order to further ensure the sealing performance between the housing 11 and the cover body 12, a sealing ring 15 may be arranged between the housing 11 and the cover body 12.

Referring to FIG. 3, the top wall and a side wall of each casing 111 are respectively provided with multiple first connecting holes 1112 arranged at intervals. A side of the baffle 112 (such as a side surface or a side flange 1121) is provided with the multiple first connecting holes 1112 arranged at intervals. The periphery of the cover body 12 is provided with multiple second connecting holes 1201 arranged at intervals. Multiple fasteners correspondingly penetrate in the multiple first connecting holes 1112 and the multiple second connecting holes 1201 to ensure the connection reliability and sealing performance of the housing 11 and the cover body 12.

During mounting, both the bottom wall of the casing 111 and the side of the baffle 112 (such as the side surface or the side flange 1121) can support the cover body 12 to facilitate the mounting of the cover body 12, which is beneficial for increasing the production efficiency.

In some embodiments, the cover body 12 can be welded to the housing 11, for example, by friction welding or laser welding.

Compared with the technical solution of using fasteners for connection, the contact resistance at a welding point using a welding manner is smaller, the grounding resistance can be reduced, the stability of low-voltage signal transmission is ensured, and the shielding effect is improved. In addition, the welding process has a higher degree of automation and higher production efficiency. By using the welding manner for connection, the cross section of a member cannot be weakened, materials are saved, and the battery pack 100 has a simpler structure and higher welding strength.

According to some embodiments of the present disclosure, an outside of the enclosure 10 is provided with multiple mounting brackets 13, and the multiple mounting brackets 13 are arranged at intervals. When the mounting bracket 13 is a metal bracket with an external insulation structure, the mounting bracket 13 needs to be subjected to de-insulation processing, so that higher structural strength is ensured, multi-point grounding of the battery pack 100 can be achieved, the signal shielding effect of the battery pack 100 is further improved, and the signal transmission performance is enhanced.

Specifically, as shown in FIG. 4, the left and right sides of the enclosure 10 are respectively provided with the multiple mounting brackets 13 arranged at intervals. Each mounting bracket 13 extends outwards in a horizontal direction (left-and-right directions shown in FIG. 4). Each mounting bracket 13 can be connected to the enclosure 10 through a fastener or through welding or other means. By arranging the multiple mounting brackets 13 outside the enclosure 10, the battery pack 100 can be conveniently mounted on a position to be mounted, thereby ensuring the stability and reliability of the battery pack 100 after mounting.

In order to reduce the weight of the battery pack 100, the middle of the mounting bracket 13 defines a cavity, and multiple connecting ribs are arranged in the cavity, thereby ensuring the structural strength of the mounting bracket 13.

According to some embodiments of the present disclosure, the outside of the enclosure 10 is provided with a grounding portion 14.

According to some embodiments of the present disclosure, the enclosure 10 is made of a metal material, that is, the cell is fully clad with the metal material. In this embodiment, it is equivalent to adding a layer of shielding cover to the cell, thereby ensuring the radio frequency protection and shielding of signals of the battery pack 100, reducing the EMC interference, enhancing the signal transmission performance, and improving the system safety and reliability. Moreover, the enclosure 10 made of the metal material has higher structural strength and higher safety performance, is simple in structure and more convenient to process and mold, and is beneficial for increasing the production efficiency.

In order to reduce the weight of the battery pack 100 and achieve the lightweight design of the battery pack 100, the enclosure 10 may be completely made of aluminum alloy. Of course, the housing 11 and the cover body 12 may also be made of different metal materials. For example, the housing 11 may be made of an aluminum alloy material, and the cover body 12 may be made of an aluminum magnesium alloy material. On the premise of ensuring the structural strength and EMC protection, the lightweight is achieved as much as possible, and the energy density of the battery pack 100 is increased.

In some embodiments, a thickness of the enclosure 10 is greater than 0.5 mm. For example, the thickness of the enclosure 10 may be 0.6 mm, 0.8 mm, or the like, which not only can further enhance the structural strength of the enclosure 10, but also has a good shielding effect on 1 MHz electromagnetic waves.

According to some other embodiments of the present disclosure, the enclosure 10 includes a body of the enclosure, and a surface of the body of the enclosure is provided with a metal layer. Specifically, the body of the enclosure may be made of a plastic material, and the surface of the body of the enclosure is sprayed with a conductive material and is connected to a shielding layer, thereby ensuring the radio frequency protection and shielding of signals of the battery pack, reducing the EMC interference, achieving good EMC expression performance, enhancing the signal transmission performance, improving the system safety and reliability, and being beneficial for achieving the lightweight design of the battery pack 100.

As shown in FIG. 1, FIG. 2, and FIG. 7, according to some embodiments of the present disclosure, the battery pack 100 further includes a heat exchange member 40, and the heat exchange member 40 is arranged at a top and/or a bottom of the enclosure 10. By arranging the heat exchange member 40 at the top and/or the bottom with a larger surface area of the enclosure 10, it can not only protect the cell but also facilitate thermal management of the battery pack 100.

Specifically, the heat exchange member 40 can be used for dissipating heat from the cell. When the battery pack 100 is located at a lower environment temperature and cannot work normally, the cell may also be heated by the heat exchange member 40.

In some embodiments, the heat exchange member 40 forms a plate member, the heat exchange member 40 is laid at the top and/or the bottom of the enclosure 10, and the heat exchange member 40 is attached to a surface of the top and/or the bottom of the enclosure 10, so that the contact area between the heat exchange member 40 and the enclosure 10 can be increased, and the heat exchange efficiency is effectively increased.

For example, the heat exchange member 40 may be a liquid cooling plate, that is, a heat exchange medium in the heat exchange member 40 is a liquid. The liquid cooling plate is arranged at the bottom of the enclosure 10, and the liquid cooling plate can be connected to the enclosure 10 through a bolt or the thermally conductive structural adhesive. The liquid cooling plate is provided with an interface 41 so as to facilitate the connection with other components. Of course, the heat exchange medium in the heat exchange member 40 may also be in a gas state.

A specific embodiment of the battery pack 100 according to the present disclosure is described in detail below with reference to the accompanying drawings.

As shown in FIG. 1 to FIG. 7, the battery pack 100 is roughly a cuboid structure, a length direction of the battery pack 100 represents front-and-rear directions shown in FIG. 1, a width direction of the battery pack 100 represents left-and-right directions shown in FIG. 1, and a height direction of the battery pack 100 represents up-and-down directions shown in FIG. 1.

The battery pack 100 includes an enclosure 10, multiple cells, and a distribution box 30.

The enclosure 10 includes a housing 11 and a cover body 12. The housing 11 is provided with a picking and placing opening 101 on a side of a length direction of the housing (front side shown in FIG. 3). Multiple chambers arranged in the width direction of the housing are defined in the housing 11. An opening 102 of each chamber faces the picking and placing opening 101, and the opening 102 of each chamber is in communication with the picking and placing opening 101, so that multiple cells are arranged in multiple chambers in a push-pull manner.

The housing 11 includes multiple casings 111 arranged in left-and-right directions. A bottom wall of each casing 111 exceeds a top wall. Edges of bottom walls of the multiple casings 111 are flush, and edges of top walls of the multiple casings 111 are flush. Multiple partition plates 1111 arranged at intervals in left-and-right directions are arranged in each casing 111, so that an inner cavity of the casing 111 is divided into multiple chambers. Bottom walls of the two outermost casings 111 are respectively provided with triangular baffles 112 at the opening 102 of the chamber. Edges of the top wall and the bottom wall of each casing 111 close to the opening 102 of the chamber are respectively provided with multiple first connecting holes 1112 arranged at intervals. The front side edge of the baffle 112 is provided with a side flange 1121. The side flange 1121 is provided with multiple first connecting holes 1112 arranged at intervals.

The cover body 12 includes a top plate 121, a first side plate 122, and two second side plates 123. The top plate 121 and the first side plate 122 are perpendicular to each other. An upper end of the first side plate 122 is connected to a front side edge of the top plate 121. The two second side plates 123 are arranged at the left and right ends of the top plate 121. Each second side plate 123 forms a right-angled triangular plate member. Upper edges of the two second side plates 123 are connected to the left and right ends of the top plate 121. A front side edges of the two second side plates 123 are connected to the left and right ends of the first side plate 122. A lower end of the first side plate 122 is provided with a first flange 1221. The front side edge of the second side plate 123 is provided with a second flange 1231. The top plate 121, the first flange 1221 of the first side plate 122, and the second flange 1231 of the second side plate 123 are respectively provided with multiple second connecting holes 1201 arranged at intervals. The first side plate 122 is provided with a port 1202 that runs through in a thickness direction of the first side plate.

The distribution box 30 includes a metal plate 31, a low-voltage connector 32, and a high-voltage connector 33. The distribution box 30 is arranged in a position of the housing 11 close to the picking and placing opening 101. When the distribution box 100 is assembled in place, the metal plate 31 is connected to an edge of the port 1202 of the cover body 12 through a fastener, and the low-voltage connector 32 and the high-voltage connector 33 are respectively exposed out of the port 1202, thereby facilitating the connection with other components.

The battery pack 100 according to the embodiment of the present disclosure is configured to be a cuboid structure, and a corresponding shielding structure is also the cuboid structure, thereby avoiding frequency resonance as much as possible. In the processes of signal input and output, the radio frequency protection and shielding of signals of the battery pack 100 are ensured, the EMC interference is reduced, the signal transmission performance is enhanced, and the system safety and reliability are improved. Moreover, the battery pack 100 has a simple structure, a regular shape, and a smaller volume, is convenient for spatial arrangement in the entire vehicle, and has higher adaptability.

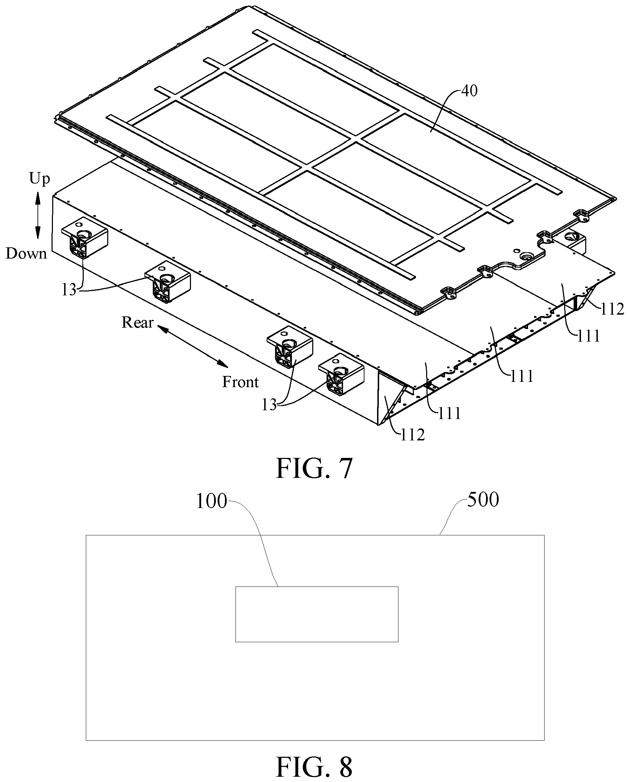

As shown in FIG. 8, the vehicle 500 according to the embodiment of the present disclosure includes the battery pack 100 according to the foregoing embodiment.

Since the battery pack 100 according to the embodiment of the present disclosure has the foregoing technical effects, the vehicle 500 according to the embodiment of the present disclosure also has the foregoing technical effects. That is, by using the foregoing battery pack 100, the EMC interference is reduced, the signal transmission performance is enhanced, the system safety and reliability are improved, and it is beneficial for prolonging the service life of the vehicle 500.

In the description of the present disclosure, it should be understood that orientation or position relationships indicated by the terms such as "center", "longitudinal", "transverse", "length", "width", "thickness", "upper", "lower", "front", "rear", "left", "right", "vertical", "horizontal", "top", "bottom", "inner", "outer", "axial", "radial", and "circumferential" are based on orientation or position relationships shown in the accompanying drawings, and are used only for ease and brevity of illustration and description, rather than indicating or implying that the mentioned apparatus or component must has a particular orientation or must be constructed and operated in a particular orientation. Therefore, such terms should not be construed as a limitation on the present disclosure.

Other compositions and operations of the battery pack 100 and the vehicle 500 according to the embodiments of the present disclosure are known to those of ordinary skill in the art and will not be described in detail herein.

In the description of this specification, the description of the reference terms such as "an embodiment", "some embodiments", "exemplary embodiments", "example", "specific example", or "some examples" means that the specific features, structures, materials, or characteristics described with reference to this embodiment or example are included in at least one embodiment or example of the present disclosure. In this specification, exemplary descriptions of the foregoing terms do not necessarily refer to the same embodiment or example. Moreover, the described specific features, structures, materials, or characteristics may be combined in a proper manner in any one or more of the embodiments or examples.

Although the embodiments of the present disclosure have been shown and described, those of ordinary skill in the art should understand that various changes, modifications, replacements, and variations may be made to these embodiments without departing from the principles and spirit of the present disclosure, and the scope of the present disclosure is defined by claims and their equivalents.

## Claims

1. A battery pack (100), comprising:
an enclosure (10);
a cell arranged in the enclosure (10); and
a distribution box (30) arranged in the enclosure (10),
the enclosure (10) comprising a housing (11) and a cover body (12), a side of the housing (11) being provided with a picking and placing opening (101) for picking and placing the cell, the cover body (12) being arranged on the side of the housing (11) to close the picking and placing opening (101), the distribution box (30) being located in a position close to the picking and placing opening (101) in the housing (11), and a metal plate (31) of the distribution box (30), the housing (11), and the cover body (12) clad the cell.

2. The battery pack (100) according to claim 1, wherein a surface area of a top of the housing (11) and a surface area of a bottom of the housing (11) are both greater than a surface area of the side of the housing (11).

3. The battery pack (100) according to claim 1 or 2, wherein a plurality of chambers arranged in an extension direction of the picking and placing opening (101) are defined in the housing (11), and an opening (102) of each of the chambers is in communication with the picking and placing opening (101) so that the cell is arranged in the chamber in a push-pull manner.

4. The battery pack (100) according to claim 3, wherein the cell is closely attached to an inner surface of the chamber; and/or a gap between the cell and the inner surface of the chamber is filled with a thermally conductive structural adhesive.

5. The battery pack (100) according to claim 3 or 4, wherein the housing (11) comprises one connected casing; or, the housing (11) comprises a plurality of connected casings (111), the plurality of casings (111) are arranged in the extension direction of the picking and placing opening (101), and the plurality of chambers are defined in each of the casings (111).

6. The battery pack (100) according to claim 5, wherein the casing (111) is made of aluminum alloy, stainless steel, or magnesium aluminum alloy, and the plurality of casings (111) are spliced together in a welding manner.

7. The battery pack (100) according to claim 5 or 6, wherein at the opening (102) of the chamber, a bottom wall of the casing (111) exceeds a top wall of the casing (111), and the housing (11) further comprises two baffles (112);
the housing (11) comprises one of the casings (111), the two baffles (112) are oppositely arranged on sides of the casing (111), and the baffles (112) and the casing (111) define the picking and placing opening (101); or,
the housing (11) comprises the plurality of connected casings (111), the two baffles (112) are oppositely arranged on sides of the two outermost casings (111), and the baffles (112) and the plurality of casings (111) define the picking and placing opening (101).

8. The battery pack (100) according to any one of claims 1 to 7, wherein an extension length of an edge of the picking and placing opening (101) is L1, a length of an outer contour line of the housing (11) obtained by cutting a vertical plane parallel to a length direction of the picking and placing opening (101) is L2, and the L1 is greater than or equal to the L2.

9. The battery pack (100) according to any one of claims 1 to 8, wherein a plane where the picking and placing opening (101) is located is obliquely arranged relative to a horizontal plane.

10. The battery pack (100) according to claim 9, wherein an included angle between the plane where the picking and placing opening (101) is located and the horizontal plane is 35° to 75°.

11. The battery pack (100) according to any one of claims 1 to 10, wherein the edge of the picking and placing opening (101) is provided with a first connecting hole (1112), an outer periphery of the cover body (12) is provided with a second connecting hole (1201), and the housing (11) is connected to the cover body (12) through a fastener penetrating in the first connecting hole (1112) and the second connecting hole (1201).

12. The battery pack (100) according to any one of claims 1 to 10, wherein the cover body (12) is welded to the housing (11).

13. The battery pack (100) according to any one of claims 1 to 12, wherein the outside of the enclosure (10) is provided with a plurality of mounting brackets (13) arranged at intervals.

14. The battery pack (100) according to any one of claims 1 to 13, wherein the outside of the enclosure (10) is provided with a grounding portion (14).

15. The battery pack (100) according to any one of claims 1 to 14, wherein the enclosure (10) is made of a metal material.

16. The battery pack (100) according to claim 15, wherein a thickness of the enclosure (10) is greater than 0.5 mm.

17. The battery pack (100) according to any one of claims 1 to 14, wherein the enclosure (10) comprises a body of the enclosure (10), and a surface of the body of the enclosure (10) is provided with a metal layer.

18. The battery pack (100) according to any one of claims 1 to 17, further comprising: a heat exchange member (40) arranged at a top and/or a bottom of the enclosure (10).

19. The battery pack (100) according to claim 18, wherein the heat exchange member (40) forms a plate member, the heat exchange member (40) is laid at the top and/or the bottom of the enclosure (10), and the heat exchange member (40) is attached to a surface of the top and/or the bottom of the enclosure (10).

20. A vehicle, comprising a battery pack (100) according to any one of claims 1 to 19.
